# FASCICULE DE BREVET EUROPEEN

(11) **EP 4 436 864 B1**
(45) Date de publication et mention de la délivrance du brevet: **31.12.2025**
(21) Numéro de dépôt: 22821489.6
(22) Date de dépôt: 22.11.2022
(51) Int. Cl.: B62M 3/00

(54) **PÉDALIER POUR VÉLO COMPRENANT DES MANIVELLES AMOVIBLES**
KURBELSATZ FÜR EIN FAHRRAD MIT ABNEHMBAREN KURBELN
CRANKSET FOR A BICYCLE COMPRISING REMOVABLE CRANKS

(30) Priorité: 25.11.2021 FR 2112536
(43) Date de publication de la demande: 02.10.2024
(73) Titulaire: Decathlon, 59650 Villeneuve d'Ascq (FR)
(72) Inventeur: MORGAND, Pierre, 59650 Villeneuve d'Ascq (FR)
(74) Mandataire: Sayettat, Julien Christian
(86) Numéro de dépôt international: PCT/EP2022/082874
(87) Numéro de publication internationale: WO 2023/094407

(56) Documents cités:
- WO-A1-2018/216676
- WO-A2-2005/058682
- JP-A- 2007 253 919
- JP-U- S52 112 371
- US-A1- 2014 319 797

## Description

L'invention concerne un pédalier pour vélo, ainsi qu'un vélo comprenant un cadre équipé d'un tel pédalier.

Elle s'applique en particulier aux pédaliers équipant les vélos pour enfant, notamment les vélos destinés aux jeunes enfants.

On connaît des pédaliers comprenant :
- un arbre monté en rotation dans un boîtier et comprenant deux extrémités sur chacune desquelles est fixée une manivelle de pédalage, afin de permettre au cycliste d'entraîner en rotation ledit arbre par appui de ses pieds sur des pédales équipant chacune desdites manivelles ;
- au moins un plateau solidaire dudit arbre, de manière à transmettre son couple de rotation à un mécanisme de déplacement du vélo, par exemple un pignon solidaire en rotation d'une roue arrière dudit vélo.

En particulier, il existe des pédaliers dont l'arbre présente deux embouts sur lesquels respectivement une base d'une manivelle de pédalage est montée au moyen d'un système d'association réversible, afin de pouvoir démonter lesdites manivelles si nécessaire.

Un tel agencement permet d'utiliser le vélo comme une draisienne, notamment lorsqu'il est destiné à un jeune enfant. Il permet également d'empêcher le vol des manivelles lorsque le vélo n'est pas utilisé, par exemple lors de son stationnement dans un lieu public.

Le document WO-2018/216676 décrit un tel vélo, dans lequel les deux manivelles sont associées à l'arbre au moyen d'un système d'association réversible comprenant une tige montée dans un alésage formé dans l'arbre, ladite tige présentant une première extrémité fixée de façon permanente à une base d'une manivelle et une seconde extrémité destinée à venir en saillie de la base de l'autre manivelle lors de leur montage sur l'arbre, un organe étant associé réversiblement sur ladite seconde extrémité pour fixer lesdites manivelles sur l'arbre.

En particulier, l'organe présente un bouton arrière qui est monté sur la seconde extrémité de la tige au moyen d'un élément déformable élastiquement entre une position fermée, dans laquelle ledit élément est engagé dans une rainure de ladite tige pour assurer la fixation des manivelles sur l'arbre, et une position ouverte de libération desdites manivelles.

Cette solution ne donne pas entière satisfaction, en ce qu'elle s'avère relativement complexe à utiliser dans la mesure où le serrage des manivelles sur l'arbre est réalisé par l'engagement de l'organe sur la tige.

L'invention vise à perfectionner l'art antérieur en proposant notamment un pédalier pour vélo dans lequel les manivelles sont associées réversiblement à l'arbre tournant de façon simple et fiable.

A cet effet, selon un premier aspect, l'invention propose un pédalier pour vélo comprenant un arbre monté en rotation dans un boîtier et au moins un plateau solidaire dudit arbre pour transmettre le couple de rotation à un mécanisme de déplacement du vélo, ledit arbre présentant deux embouts sur lesquels respectivement une base d'une manivelle de pédalage est montée au moyen d'un système d'association réversible comprenant une tige montée en rotation dans un alésage formé dans l'arbre, ladite tige présentant une première extrémité pourvue d'un filetage saillant de la base d'une première manivelle pour coopérer avec un écrou de serrage axial des manivelles en position montée sur l'arbre, la tige présentant une deuxième extrémité qui est saillante de la base de la deuxième manivelle, ladite deuxième extrémité étant équipée d'un organe d'actionnement manuel de la tige en rotation dans un sens de serrage, ledit organe présentant un dispositif d'anti-retour pour empêcher la rotation dans le sens opposé de desserrage, ledit dispositif étant désactivable manuellement pour libérer l'actionnement de la tige en rotation dans le sens de desserrage en vue du démontage des manivelles.

Selon un deuxième aspect, l'invention propose un vélo comprenant un cadre équipé d'un tel pédalier, dans lequel le boîtier dudit pédalier est intégré audit cadre.

D'autres particularités et avantages de l'invention apparaîtront dans la description qui suit, faite en référence aux figures annexées, dans lesquelles :
[Fig.1a] et
[Fig.1b] représentent schématiquement un pédalier pour vélo selon un mode de réalisation de l'invention, respectivement en perspective (figure 1a) et en coupe longitudinale (figure 1b) ;
[Fig.2] représente partiellement en coupe longitudinale un pédalier de vélo selon une variante de la réalisation des figures 1a et 1b ;
[Fig.3] représente en perspective partiellement éclatée le pédalier de vélo des figures 1a et 1b, le boîtier n'étant pas représenté ;
[Fig.4a] et
[Fig.4b] représentent partiellement en coupe longitudinale l'organe d'actionnement manuel du pédalier de la figure 2, dans lequel le dispositif d'anti-retour est respectivement activé (figure 4a) et désactivé (figure 4b) ;
[Fig.5] représente en perspective vue de l'arrière l'organe d'actionnement des figures précédentes ;
[Fig.6] représente en vue avant la couronne anti-retour de la manivelle des figures précédentes ;
[Fig.7] représente en vue latérale la coopération entre les couronnes anti-retour respectives de l'organe d'actionnement et de la manivelle (non représentée) des figures précédentes.

En relation avec ces figures, on décrit ci-dessous un pédalier pour vélo, ainsi qu'un vélo comprenant un cadre équipé d'un tel pédalier.

Le pédalier comprend un arbre 1 monté en rotation dans un boîtier 2 et au moins un plateau 3 solidaire dudit arbre pour transmettre le couple de rotation à un mécanisme de déplacement du vélo.

Dans le mode de réalisation représenté, le boîtier 2 est formé d'une pièce tubulaire indépendante destinée à être fixée dans un logement prévu à cet effet dans le cadre d'un vélo (non représenté). En variante, le boîtier 2 peut être intégré au cadre du vélo, en étant formé d'une seule pièce avec ledit cadre.

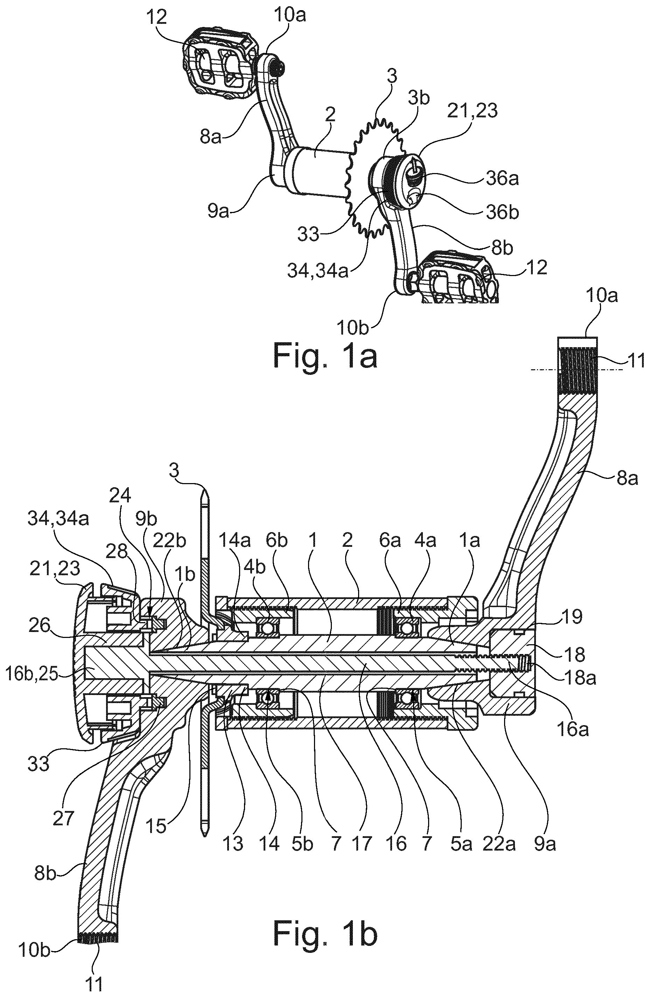

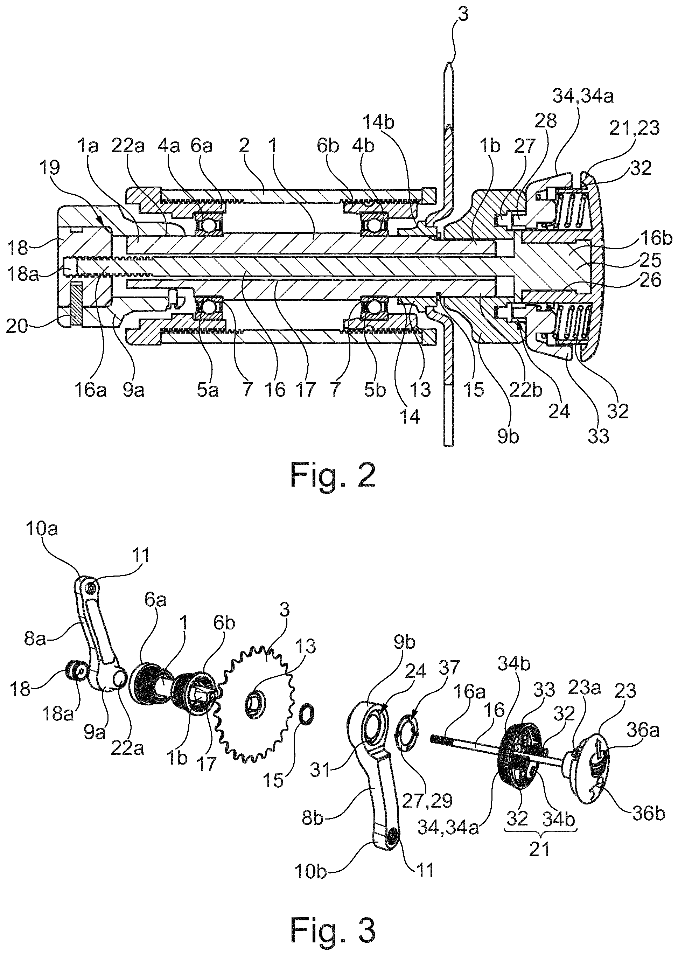

Sur les figures 1b et 2, l'arbre 1 est monté dans le boîtier 2 par l'intermédiaire de deux paliers à roulement 4a, 4b, qui sont interposés entre ledit boîtier et respectivement une première 5a et une deuxième 5b portées de la périphérie dudit arbre.

Au moins une portée 5a, 5b présente un épaulement 7 sur lequel le palier 4a, 4b correspondant est en butée axiale, une bague 6a, 6b étant montée sur le boîtier 2 pour assurer la précharge dudit palier sur ledit épaulement.

Dans la description, les termes de positionnement dans l'espace sont pris en référence à l'axe de rotation de l'arbre 1 (horizontal sur les figures1b et 2), et sont relatifs à une direction respectivement parallèle et perpendiculaire à cet axe pour les termes « longitudinal » et « radial », un positionnement respectivement proche et éloigné de cet axe pour les termes « intérieur » et « extérieur ».

Sur les figures, chaque portée 5a, 5b présente un tel épaulement 7, le pédalier comprenant une première 6a et une deuxième 6b bagues pour assurer la précharge d'un palier 4a, 4b sur respectivement la première portée 5a et la deuxième portée 5b. En particulier, chaque bague 6a, 6b présente une périphérie extérieure filetée destinée à coopérer avec un bord interne fileté formé dans respectivement une extrémité du boîtier 2.

Le pédalier comprend en outre deux manivelles de pédalage 8a, 8b qui présentent chacune une base 9a, 9b destinée à être associée à l'arbre 1, et une extrémité libre 10a, 10b pourvue d'un alésage fileté 11 pour la fixation d'une pédale 12, comme représenté sur la figure 1a, afin de permettre au cycliste d'entraîner en rotation ledit arbre par appui de ses pieds sur lesdites pédales.

L'arbre 1 présente deux embouts 1a, 1b sur lesquels respectivement une base 9a, 9b d'une manivelle de pédalage 8a, 8b est montée au moyen d'un système d'association réversible.

Cet agencement permet de retirer les manivelles 8a, 8b du pédalier, par exemple pour permettre au cycliste d'utiliser le vélo comme une draisienne, ce qui est particulièrement avantageux dans le cas d'un vélo destiné à un jeune enfant.

En particulier, le plateau 3 est fixé sur la périphérie de l'arbre 1 en étant mécaniquement dissocié des manivelles 8a, 8b, ce qui permet à un utilisateur de retirer les manivelles 8a, 8b de l'arbre 1 en laissant ledit plateau associé audit arbre, et donc de faciliter le passage en mode draisienne.

Sur les figures, le plateau 3 comprend une roue dentée qui est destinée à entraîner en rotation une roue du vélo, notamment la roue arrière, par l'intermédiaire d'une chaîne qui est engrenée sur ladite roue et sur au moins un pignon solidaire en rotation de ladite roue. En variante, le plateau 3 peut être adapté pour entraîner en rotation un autre type de mécanisme de déplacement pour le vélo, par exemple par l'intermédiaire d'un système à cardan.

Le plateau 3 est monté sur un manchon 13 qui est emmanché sur une portée 14 de l'arbre 1, un anneau d'arrêt 15 étant monté à l'arrière de ladite portée après ledit emmanchement pour fiabiliser la tenue axiale dudit manchon sur ledit arbre.

Sur la figure 2, la portée 14 d'emmanchement du plateau 3 présente un épaulement arrière 14b dans lequel est disposé l'anneau d'arrêt 15 après passage du manchon 13.

Par ailleurs, comme représenté sur la figure 2, la portée d'emmanchement 14 peut également présenter une butée avant 14a, notamment formée par un épaulement dans la périphérie de l'arbre 1, contre laquelle le manchon 13 vient en appui axial lors de son montage autour dudit arbre.

La portée d'emmanchement 14 est réalisée dans le prolongement axial arrière d'un embout 1b de montage d'une manivelle 8b, ce qui permet de réduire l'encombrement axial du pédalier.

En particulier, comme représenté sur les figures 1b et 2, la portée d'emmanchement 14 est également formée dans le prolongement axial avant d'une portée 5b de montage d'un palier à roulement 4b, de sorte que le manchon 13 soit entouré radialement par la bague de précharge 6b correspondante lors de son emmanchement sur l'arbre 1.

Le système d'association des manivelles 8a, 8b comprend une tige 16 montée en rotation dans un alésage 17 formé dans l'arbre 1, ladite tige présentant une première extrémité 16a pourvue d'un filetage saillant de la base 9a d'une première manivelle 8a pour coopérer avec un écrou 18 de serrage axial des manivelles 8a, 8b en position montée sur l'arbre 1.

Sur les figures 1b et 2, la base 9a de la première manivelle 8a présente un évidement 19 formé à l'opposé de l'arbre 1 et dans lequel est disposé l'écrou 18. Cet agencement permet de protéger l'écrou 18 contre d'éventuels chocs, notamment contre les pieds et/ou les jambes du cycliste, afin de limiter les risques de blessure pour ledit cycliste.

En particulier, l'écrou 18 est immobilisé en rotation dans l'évidement 19 au moyen d'une clavette 20, comme représenté sur la figure 2.

La tige 16 présente en outre une deuxième extrémité 16b qui est saillante de la base 9b de la deuxième manivelle 8b, en étant équipée d'un organe 21 d'actionnement manuel de la tige 16 en rotation dans un sens de serrage, ledit organe présentant un dispositif d'anti-retour pour empêcher la rotation dans le sens opposé du desserrage, ledit dispositif étant désactivable manuellement pour libérer l'actionnement de la tige 16 en rotation dans le sens de desserrage en vue du démontage des manivelles 8a, 8b.

Ainsi, les manivelles 8a, 8b sont fixées sur l'arbre 1 par serrage en rotation d'un organe 21, ce qui constitue une gestuelle particulièrement simple et intuitive, et permet en outre de fiabiliser ladite fixation.

Sur les figures, le plateau 3 est emmanché sur une portée 14 formée dans le prolongement axial de l'embout 1b de montage de la deuxième manivelle 8b.

Au moins une base 9a, 9b d'une manivelle 8a, 8b présente un conduit 22a, 22b de montage sur l'embout 1a, 1b, la tige 16 étant disposée dans ledit conduit avec son extrémité 16a, 16b saillante à l'opposé de l'arbre 1.

Dans le mode de réalisation représenté, les deux bases 9a, 9b présentent chacune un tel conduit 22a, 22b pour le montage sur l'embout 1a, 1b correspondant. En particulier, le conduit 22a de la première manivelle 8a débouche axialement à l'arrière de l'évidement 19 de réception de l'écrou 18 de serrage.

Sur la figure 1b, chaque conduit de montage 22a, 22b présente une section conique, l'embout 1a, 1b de l'arbre 1 présentant une section complémentaire sur laquelle ledit conduit est monté.

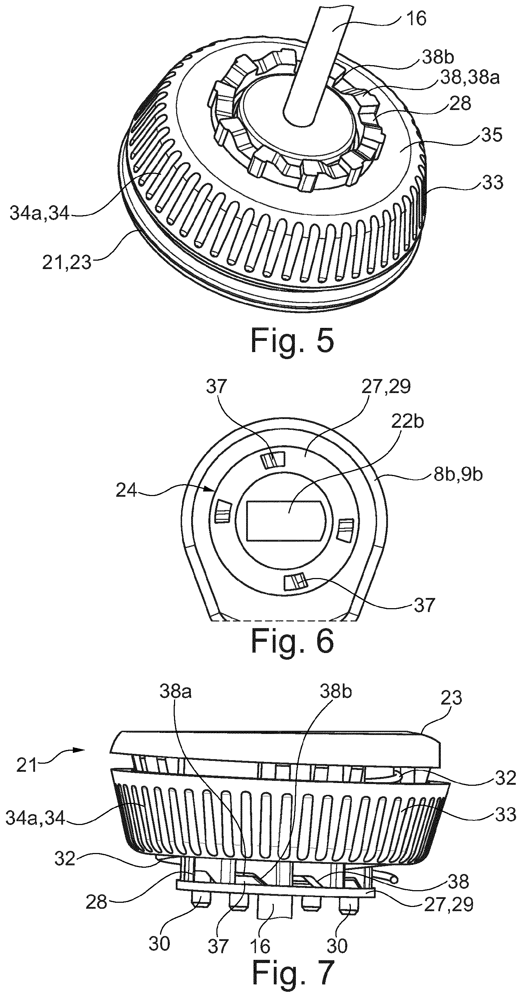

Par ailleurs, comme représenté sur les figures 3 et 6, au moins un conduit de montage 22a, 22b et l'embout 1a, 1b de l'arbre 1 sur lequel il est monté présentent une géométrie qui n'est pas de révolution, afin d'immobiliser en rotation la manivelle 8a, 8b par rapport à l'arbre 1 lors de son montage sur ledit embout.

L'organe d'actionnement 21 comprend une molette 23 qui est fixée sur la deuxième extrémité 16b de la tige 16, le dispositif d'anti-retour étant disposé entre ladite molette et la base 9b de la deuxième manivelle 8b.

En particulier :
- la deuxième extrémité 16b de la tige 16 présente un embout 25 qui est fixé par surmoulage, emmanchement et/ou encliquetage dans un logement 26 prévu à cet effet à l'arrière de la molette 23 ;
- la base 9b présente un évidement 24 formé à l'opposé de l'arbre 1, le dispositif d'anti-retour étant disposé dans ledit évidement.

Comme représenté notamment sur les figures 3 et 5 à 7, le dispositif anti-retour comprend deux couronnes 27, 28 qui sont solidaires en rotation de respectivement la base 9b de la deuxième manivelle 8b et l'organe d'actionnement 21, en présentant deux parois en regard.

Chacune des parois des couronnes 27, 28 porte des moyens géométriques qui sont agencés pour permettre la rotation d'une paroi sur l'autre uniquement dans le sens de serrage, la couronne 28 de l'organe 21 étant contrainte sur la couronne 27 de la base 9b pour empêcher la rotation dans le sens de desserrage et étant déplaçable par rapport à la couronne 27 de la base 9b pour libérer ladite rotation dans le sens de desserrage.

La couronne 27 de la base 9b est formée par une rondelle 29 qui est immobilisée sur ladite base. Pour ce faire, la rondelle 29 est disposée dans un siège annulaire complémentaire prévu à cet effet dans le fond de l'évidement 24 formé sur la base 9b.

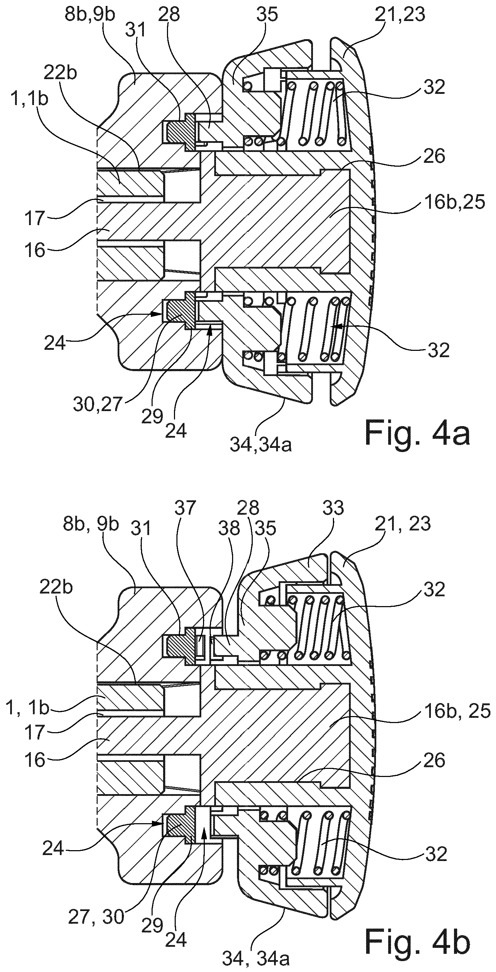

En particulier, comme représenté sur les figures 3, 4a, 4b et 7, la rondelle 29 présente une paroi arrière équipée de moyens de fixation dans l'évidement 24, sous la forme de quatre picots 30 équirépartis angulairement qui viennent chacun s'engager dans respectivement une cavité 31 complémentaire prévue à cet effet dans le fond de l'évidement 24.

La couronne 28 de l'organe 21 est montée en translation dans la molette 23, un ressort 32 étant interposé entre ladite molette et ladite couronne pour la contraindre élastiquement sur la couronne 27 de la base 9b afin d'empêcher la rotation dans le sens de desserrage, ledit ressort étant agencé pour permettre la translation manuelle de la couronne 28 de l'organe 21 à distance de la couronne 27 de la base 9b afin de libérer ladite rotation dans le sens de desserrage.

Dans le mode de réalisation représenté, la couronne 28 de l'organe 21 est formée sur une bague 33 présentant une paroi extérieure 34 de préhension pour son déplacement manuel, ladite bague étant solidaire en rotation de l'organe d'actionnement 21.

En particulier, la bague 33 est intégrée dans la molette 23 pour former l'organe d'actionnement 21 au moyen de la paroi extérieure 34 de préhension, la molette 23 venant en regard axial de la paroi extérieure 34 pour former avec la bague 33 un bouton fermé définissant ledit organe.

Sur les figures, la bague 33 comprend une paroi annulaire radiale 35 sur une face arrière de laquelle est formée la couronne 28, deux ressorts 32 étant disposés en appui entre une face avant de ladite paroi radiale et une face arrière de la molette 21 pour contraindre élastiquement la bague 33 sur la paroi avant de la base 9b de la deuxième manivelle 8b.

Par ailleurs, la bague 33 comprend une paroi périphérique 34 qui s'étend sensiblement axialement depuis la face avant de la paroi radiale 35, ladite paroi périphérique présentant une portée extérieure 34a sur laquelle des rainures axiales sont équiréparties angulairement, afin de faciliter la préhension de ladite paroi périphérique par un utilisateur pour manipuler l'organe d'actionnement 21.

En relation avec la figure 3, la paroi périphérique 34 présente également deux ergots 34b diamétralement opposés qui sont formés à proximité de son bord avant, en s'étendant radialement vers l'intérieur. De même, la molette 23 présente deux crochets 23a qui viennent en butée axiale sous respectivement un ergot 34b sous l'effet de la contrainte élastique exercée par les ressorts 32, afin d'assurer la solidarisation de ladite molette à ladite bague.

Après avoir monté la première manivelle 8a sur un embout 1a de l'arbre 1, l'utilisateur dispose la deuxième manivelle 8b sur l'autre embout 1b en introduisant la tige 16 dans l'alésage 17 dudit arbre, de manière à disposer l'extrémité filetée 16a en regard axial d'un trou taraudé 18a formé à cet effet dans l'écrou 18. Ensuite, pour finaliser le montage, l'utilisateur saisit la paroi périphérique 34 de la bague 33 pour tourner la molette 23 dans le sens du serrage.

Pour démonter les manivelles 8a, 8b du boîtier 2, notamment pour utiliser le vélo comme une draisienne, l'utilisateur saisit la paroi périphérique 34 pour tirer la bague vers l'arrière, afin de désengager les couronnes d'anti-retour 27, 28, puis tourne la bague 33 dans le sens du desserrage tout en maintenant cette traction, afin de dévisser la tige 16 de l'écrou 18.

Comme représenté sur les figures 1a et 3, la paroi avant de la molette 23 présente des inscriptions 36a, 36b, notamment sous la forme de schémas, pour indiquer à l'utilisateur les manipulations à effectuer sur l'organe 21 pour démonter les manivelles 8a, 8b, par exemple :
- une première inscription 36a pour indiquer le mouvement de traction axiale à effectuer sur la bague 33 pour libérer sa rotation dans le sens du desserrage ; et
- une seconde inscription 36b pour indiquer le sens de la rotation à effectuer avec la bague 33 pour desserrer les manivelles 8a, 8b.

En relation avec les figures 5 à 7, les moyens géométriques d'association des couronnes 27, 28 comprennent des picots 37 formés sur la paroi d'une couronne 27 et des rampes 38 formées sur la paroi de l'autre couronne 28, lesdites rampes formant une surface de glissement annulaire 38a pour les picots 37 dans le sens du serrage et des butées axiales 38b empêchant le glissement desdits picots dans le sens de desserrage.

En particulier, la couronne 27 de la base 9b comprend quatre picots 37 équirépartis angulairement sur une face avant de la rondelle 29, la couronne 28 de l'organe 21 comprenant dix rampes 38 équiréparties angulairement sur la face arrière de la paroi radiale 35 de la bague 33.

## Revendications

1. Pédalier pour vélo comprenant un arbre (1) monté en rotation dans un boîtier (2) et au moins un plateau (3) solidaire dudit arbre pour transmettre le couple de rotation à un mécanisme de déplacement du vélo, ledit arbre présentant deux embouts (1a, 1b) sur lesquels respectivement une base (9a, 9b) d'une manivelle de pédalage (8a, 8b) est montée au moyen d'un système d'association réversible comprenant une tige (16) montée en rotation dans un alésage (17) formé dans l'arbre (1), ledit pédalier étant **caractérisé en ce que** la tige (16) présente une première extrémité (16a) pourvue d'un filetage saillant de la base (9a) d'une première manivelle (8a) pour coopérer avec un écrou (18) de serrage axial des manivelles (8a, 8b) en position montée sur l'arbre (1), ladite tige présentant une deuxième extrémité (16b) qui est saillante de la base (9b) de la deuxième manivelle (8b), ladite deuxième extrémité étant équipée d'un organe (21) d'actionnement manuel de la tige (16) en rotation dans un sens de serrage, ledit organe présentant un dispositif d'anti-retour pour empêcher la rotation dans le sens opposé de desserrage, ledit dispositif étant désactivable manuellement pour libérer l'actionnement de la tige (16) en rotation dans le sens de desserrage en vue du démontage des manivelles (8a, 8b).

2. Pédalier pour vélo selon la revendication 1, **caractérisé en ce qu'**au moins une base (9a, 9b) d'une manivelle (8a, 8b) présente un conduit (22a, 22b) de montage sur l'embout (1a,1b) de l'arbre (1), la tige (16) étant disposée dans ledit conduit avec son extrémité (16a, 16b) saillante à l'opposé dudit arbre.

3. Pédalier pour vélo selon la revendication 2, **caractérisé en ce qu'**au moins un conduit de montage (22a, 22b) présente une section conique, l'embout (1a, 1b) de l'arbre (1) présentant une section complémentaire sur laquelle ledit conduit est monté.

4. Pédalier pour vélo selon l'une des revendications 2 ou 3, **caractérisé en ce qu'**au moins un conduit de montage (22a, 22b) et l'embout (1a, 1b) de l'arbre (1) sur lequel il est monté présentent une géométrie qui n'est pas de révolution.

5. Pédalier pour vélo selon l'une quelconque des revendications 1 à 4, **caractérisé en ce que** l'organe d'actionnement (21) comprend une molette (23) qui est fixée sur la deuxième extrémité (16b) de la tige (16), le dispositif d'anti-retour étant disposé entre ladite mollette et la base (9b) de la deuxième manivelle (8b).

6. Pédalier pour vélo selon l'une quelconque des revendications 1 à 5, **caractérisé en ce que** le dispositif anti-retour comprend deux couronnes (27, 28) qui sont solidaires en rotation de respectivement la base (9b) de la deuxième manivelle (8b) et l'organe d'actionnement (21) en présentant deux parois en regard, chacune desdites parois portant des moyens géométriques (37, 38) qui sont agencés pour permettre la rotation d'une paroi sur l'autre uniquement dans le sens de serrage, la couronne (28) de l'organe (21) étant contrainte sur la couronne (27) de la base (9b) pour empêcher la rotation dans le sens de desserrage et étant déplaçable par rapport à la couronne (27) de la base (9b) pour libérer ladite rotation dans le sens de desserrage.

7. Pédalier pour vélo selon les revendications 5 et 6, **caractérisé en ce que** la couronne (28) de l'organe (21) est montée en translation dans la molette (23), un ressort (32) étant interposé entre ladite molette et ladite couronne pour la contraindre élastiquement sur la couronne (27) de la base (9b) afin d'empêcher la rotation dans le sens de desserrage, ledit ressort étant agencé pour permettre la translation manuelle de la couronne (28) de l'organe (21) à distance de la couronne (27) de la base (9b) afin de libérer ladite rotation dans le sens de desserrage.

8. Pédalier pour vélo selon l'une des revendications 6 ou 7, **caractérisé en ce que** la couronne (28) de l'organe (21) est formée sur une bague (33) présentant une paroi extérieure (34) de préhension pour son déplacement manuel, ladite bague étant solidaire en rotation de l'organe d'actionnement (21).

9. Pédalier pour vélo selon l'une quelconque des revendications 6 à 8, **caractérisé en ce que** les moyens géométriques comprennent des picots (37) formés sur la paroi d'une couronne (27) et des rampes (38) formées sur la paroi de l'autre couronne (28), lesdites rampes formant une surface de glissement annulaire (38a) pour les picots (37) dans le sens de serrage et des butées axiales (38b) empêchement le glissement desdites picots dans le sens de desserrage.

10. Pédalier pour vélo selon l'une quelconque des revendications 1 à 9, **caractérisé en ce que** le plateau (3) est fixé sur la périphérie de l'arbre (1).

11. Pédalier pour vélo selon la revendication 10, **caractérisé en ce que** le plateau (3) est monté sur un manchon (13) qui est emmanché sur une portée (14) de l'arbre (1).

12. Pédalier selon la revendication 11, **caractérisé en ce que** la portée (14) est réalisée dans le prolongement axial d'un embout (1b) de montage d'une manivelle (8b).

13. Pédalier pour vélo selon l'une quelconque des revendications 1 à 12, **caractérisé en ce que** la base (9a) de la première manivelle (8a) présente un évidement (19) formé à l'opposé de l'arbre (1), l'écrou (18) étant disposé dans ledit évidement.

14. Pédalier pour vélo selon l'une quelconque des revendications 1 à 13, **caractérisé en ce que** l'arbre (1) est monté dans le boîtier (2) par l'intermédiaire de deux paliers à roulement (4a, 4b) qui sont interposés entre ledit boîtier et respectivement une première (5a) et une deuxième (5b) portée de la périphérie dudit arbre.

15. Vélo comprenant un cadre équipé un pédalier selon l'une quelconque des revendications 1 à 14, dans lequel le boîtier (2) est intégré audit cadre.

## Patentansprüche

1. Kurbelsatz für ein Fahrrad, umfassend eine Welle (1), die drehbar in einem Gehäuse (2) montiert ist, und mindestens ein Kettenblatt (3), das fest mit der Welle verbunden ist, um das Drehmoment auf einen Fortbewegungsmechanismus des Fahrrads zu übertragen, wobei die Welle zwei Endstücke (1a, 1b) aufweist, an denen jeweils eine Basis (9a, 9b) einer Tretkurbel (8a, 8b) mittels eines reversiblen Assoziationssystems montiert ist, umfassend eine Stange (16), die drehbar in einer Bohrung (17) montiert ist, die in der Welle (1) gebildet ist, wobei der Kurbelsatz **dadurch gekennzeichnet ist, dass** die Stange (16) ein erstes Ende (16a) aufweist, das mit einem Gewinde versehen ist, das von der Basis (9a) einer ersten Kurbel (8a) hervorsteht, um mit einer Mutter (18) zum axialen Einspannen der Kurbeln (8a, 8b) in einer auf der Welle (1) montierten Position zusammenzuwirken, wobei die Stange ein zweites Ende (16b) aufweist, das von der Basis (9b) der zweiten Kurbel (8b) hervorsteht, wobei das zweite Ende mit einem Element (21) zur manuellen Betätigung der Stange (16) zur Drehung in einer Einspannrichtung ausgestattet ist, wobei das Element eine Rücklaufsperrvorrichtung aufweist, um die Drehung in die entgegengesetzte Löserichtung zu verhindern, wobei die Vorrichtung manuell deaktivierbar ist, um die Betätigung der Stange (16) zur Drehung in der Löserichtung zum Ausbau der Kurbeln (8a, 8b) freizugeben.

2. Kurbelsatz für ein Fahrrad nach Anspruch 1, **dadurch gekennzeichnet, dass** mindestens eine Basis (9a, 9b) einer Kurbel (8a, 8b) einen Kanal (22a, 22b) zur Montage an dem Endstück (1a, 1b) der Welle (1) aufweist, wobei die Stange (16) mit ihrem Ende (16a, 16b) gegenüber von der Welle hervorstehend in dem Kanal angeordnet ist.

3. Kurbelsatz für ein Fahrrad nach Anspruch 2, **dadurch gekennzeichnet, dass** mindestens ein Montagekanal (22a, 22b) einen konischen Querschnitt aufweist, wobei das Endstück (1a, 1b) der Welle (1) einen komplementären Abschnitt aufweist, an dem der Kanal montiert ist.

4. Kurbelsatz für ein Fahrrad nach einem der Ansprüche 2 oder 3, **dadurch gekennzeichnet, dass** mindestens ein Montagekanal (22a, 22b) und das Endstück (1a, 1b) der Welle (1), an dem er montiert ist, eine Geometrie aufweisen, die keine Rotationsgeometrie ist.

5. Kurbelsatz für ein Fahrrad nach einem der Ansprüche 1 bis 4, **dadurch gekennzeichnet, dass** das Betätigungselement (21) ein Rändelrad (23) umfasst, das an dem zweiten Ende (16b) der Stange (16) befestigt ist, wobei die Rücklaufsperrvorrichtung zwischen dem Rändelrad und der Basis (9b) der zweiten Kurbel (8b) angeordnet ist.

6. Kurbelsatz für ein Fahrrad nach einem der Ansprüche 1 bis 5, **dadurch gekennzeichnet, dass** die Rücklaufsperrvorrichtung zwei Kränze (27, 28) umfasst, die jeweils drehfest mit der Basis (9b) der zweiten Kurbel (8b) und dem Betätigungselement (21) sind, indem sie zwei einander gegenüberliegende Wände aufweisen, wobei jede der Wände geometrische Einrichtungen (37, 38) trägt, die eingerichtet sind, um die Drehung einer Wand auf der anderen nur in der Einspannrichtung zuzulassen, der Kranz (28) des Elements (21) auf den Kranz (27) der Basis (9b) gezwängt ist, um die Drehung in der Löserichtung zu verhindern, und in Bezug auf den Kranz (27) der Basis (9b) bewegbar zu sein, um die Drehung in der Löserichtung freizugeben.

7. Kurbelsatz für ein Fahrrad nach den Ansprüchen 5 und 6, **dadurch gekennzeichnet, dass** der Kranz (28) des Elements (21) translatorisch in dem Rändelrad (23) montiert ist, wobei eine Feder (32) zwischen das Rändelrad und den Kranz eingefügt ist, um es elastisch auf den Kranz (27) der Basis (9b) zu zwingen, um die Drehung in der Löserichtung zu verhindern, wobei die Feder eingerichtet ist, um die manuelle Verschiebung des Kranzes (28) des Elements (21) weg von dem Kranz (27) der Basis (9b) zuzulassen, um die Drehung in der Löserichtung freizugeben.

8. Kurbelsatz für ein Fahrrad nach einem der Ansprüche 6 oder 7, **dadurch gekennzeichnet, dass** der Kranz (28) des Elements (21) auf einem Ring (33) gebildet ist, der eine Außenwand (34) zum Ergreifen für seine manuelle Verlagerung aufweist, wobei der Ring drehfest mit dem Betätigungselement (21) ist.

9. Kurbelsatz für ein Fahrrad nach einem der Ansprüche 6 bis 8, **dadurch gekennzeichnet, dass** die geometrischen Einrichtungen Stifte (37), die an der Wand eines Kranzes (27) gebildet sind, und Rampen (38), die an der Wand des anderen Kranzes (28) gebildet sind, umfassen, wobei die Rampen eine ringförmige Gleitfläche (38a) für die Stifte (37) in der Einspannrichtung bilden und axiale Anschläge (38b) das Gleiten der Stifte in der Löserichtung verhindern.

10. Kurbelsatz für ein Fahrrad nach einem der Ansprüche 1 bis 9, **dadurch gekennzeichnet, dass** das Kettenblatt (3) an dem Umfang der Welle (1) befestigt ist.

11. Kurbelsatz für ein Fahrrad nach Anspruch 10, **dadurch gekennzeichnet, dass** das Kettenblatt (3) auf einer Hülse (13) montiert ist, die auf einen Sitz (14) der Welle (1) aufgepresst ist.

12. Kurbelsatz nach Anspruch 11, **dadurch gekennzeichnet, dass** der Sitz (14) in der axialen Verlängerung eines Endstücks (1b) zur Montage einer Kurbel (8b) ausgeführt ist.

13. Kurbelsatz für ein Fahrrad nach einem der Ansprüche 1 bis 12, **dadurch gekennzeichnet, dass** die Basis (9a) der ersten Kurbel (8a) eine Aussparung (19) aufweist, die gegenüber der Welle (1) gebildet ist, wobei die Mutter (18) in der Aussparung angeordnet ist.

14. Kurbelsatz für ein Fahrrad nach einem der Ansprüche 1 bis 13, **dadurch gekennzeichnet, dass** die Welle (1) in dem Gehäuse (2) über zwei Wälzlager (4a, 4b) montiert ist, die zwischen das Gehäuse und jeweils einen ersten (5a) und einen zweiten (5b) Sitz des Umfangs der Welle eingefügt sind.

15. Fahrrad, umfassend einen Rahmen, der mit einem Kurbelsatz nach einem der Ansprüche 1 bis 14 ausgestattet ist, wobei das Gehäuse (2) in den Rahmen integriert ist.

## Claims

1. Bicycle crankset comprising a shaft (1) rotatably mounted in a housing (2) and at least one chainring (3) connected to said shaft for transmitting rotation torque to a bicycle moving mechanism, said shaft having two endpieces (1a, 1b) on which respectively a base (9a, 9b) of a pedalling crank (8a, 8b) is mounted by means of a reversible association system comprising a rod (16) rotatably mounted in a bore (17) formed in the shaft (1), said crankset being **characterized in that** the rod (16) has a first end (16a) provided with a screwthread projecting from the base (9a) of a first crank (8a) to engage with a nut (18) for axially tightening the cranks (8a, 8b) in a position mounted on the shaft (1), said rod having a second end (16b) which projects from the base (9b) of the second crank (8b), said second end being equipped with a member (21) for manually actuating the rod (16) in rotation in a tightening direction, said member having a non-return device to prevent rotation in the opposite loosening direction, said device being manually deactivatable to release actuation of the rod (16) in rotation in the loosening direction for disassembly of the cranks (8a, 8b).

2. Bicycle crankset according to claim 1, **characterized in that** at least one base (9a, 9b) of a crank (8a, 8b) has a duct (22a, 22b) for mounting on the endpiece (1a, 1b) of the shaft (1), the rod (16) being arranged in said duct with its end (16a, 16b) projecting away from said shaft.

3. Bicycle crankset according to claim 2, **characterized in that** at least one mounting duct (22a, 22b) has a conical cross-section, the endpiece (1a, 1b) of the shaft (1) having a complementary cross-section on which said duct is mounted.

4. Bicycle crankset according to one of claims 2 or 3, **characterized in that** at least one mounting duct (22a, 22b) and the endpiece (1a, 1b) of the shaft (1) on which it is mounted have a geometry that is not rotationally symmetrical.

5. Bicycle crankset according to any one of claims 1 to 4, **characterized in that** the actuation member (21) comprises a knurled wheel (23) which is fixed to the second end (16b) of the rod (16), the non-return device being arranged between said knurled wheel and the base (9b) of the second crank (8b).

6. Bicycle crankset according to any one of claims 1 to 5, **characterized in that** the non-return device comprises two crowns (27, 28) which are secured in rotation to respectively the base (9b) of the second crank (8b) and the actuation member (21) by presenting two facing walls, each of said walls carrying geometric means (37, 38) which are arranged to allow rotation of one wall on the other only in the tightening direction, the crown (28) of the member (21) being constrained on the crown (27) of the base (9b) to prevent rotation in the loosening direction and being displaceable relative to the crown (27) of the base (9b) to release said rotation in the loosening direction.

7. Bicycle crankset according to claims 5 and 6, **characterized in that** the crown (28) of the member (21) is mounted in translation in the knurled wheel (23), a spring (32) being interposed between said knurled wheel and said crown to constrain it elastically on the crown (27) of the base (9b) in order to prevent rotation in the loosening direction, said spring being arranged to allow manual translation of the crown (28) of the member (21) away from the crown (27) of the base (9b) in order to release said rotation in the loosening direction.

8. Bicycle crankset according to one of claims 6 or 7, **characterized in that** the crown (28) of the member (21) is formed on a ring (33) having an outer gripping wall (34) for its manual displacement, said ring being secured in rotation to the actuation member (21).

9. Bicycle crankset according to any one of claims 6 to 8, **characterized in that** the geometric means comprise pins (37) formed on the wall of one crown (27) and ramps (38) formed on the wall of the other crown (28), said ramps forming an annular sliding surface (38a) for the pins (37) in the tightening direction and axial stops (38b) preventing sliding of said pins in the loosening direction.

10. Bicycle crankset according to any one of claims 1 to 9, **characterized in that** the chainring (3) is fixed to the periphery of the shaft (1).

11. Bicycle crankset according to claim 10, **characterized in that** the chainring (3) is mounted on a sleeve (13) which is fitted onto a bearing surface (14) of the shaft (1).

12. Crankset according to claim 11, **characterized in that** the bearing surface (14) is designed as an axial extension of an endpiece (1b) for mounting a crank (8b).

13. Bicycle crankset according to any one of claims 1 to 12, **characterized in that** the base (9a) of the first crank (8a) has a recess (19) formed opposite the shaft (1), the nut (18) being arranged in said recess.

14. Bicycle crankset according to any one of claims 1 to 13, **characterized in that** the shaft (1) is mounted in the housing (2) by means of two rolling bearings (4a, 4b) which are interposed between said housing and respectively a first bearing surface (5a) and a second bearing surface (5b) on the periphery of said shaft.

15. Bicycle comprising a frame equipped with a crankset according to any one of claims 1 to 14, wherein the housing (2) is integrated into said frame.
